# EUROPÄISCHE PATENTANMELDUNG

(11) **EP 4 764 750 A1**
(43) Veröffentlichungstag der Anmeldung: **24.06.2026**
(21) Anmeldenummer: 24221673.7
(22) Anmeldetag: 19.12.2024
(51) Int. Cl.: G05B 19/4097

(54) **OPTIMIERUNG VON CNC-CODE UNTER BERÜCKSICHTIGUNG INSBESONDERE VON NACHHALTIGKEITSASPEKTEN**

(71) Anmelder: Siemens Aktiengesellschaft, 80333 München (DE)
(72) Erfinder: Thamm, Aleksandra, 90762 Fürth (DE); Thamm, Florian, 90762 Fürth (DE)
(74) Vertreter: Siemens Patent Attorneys

(57) **Zusammenfassung**

Die vorliegende Offenlegung stellt ein Verfahren zur Erzeugung von optimiertem CNC-Code bereit. Das Verfahren umfasst das Empfangen eines Eingabe-CNC-Codes oder CAD-Modells, das Generieren eines optimierten CNC-Codes unter Verwendung eines vortrainierten Large Language Models (LLM), das Erstellen eines CAD-Modells und einer entsprechenden Energieverbrauchskurve aus dem optimierten CNC-Code, das Vergleichen des erstellten CAD-Modells mit einem ursprünglichen CAD-Modell auf geometrische Ähnlichkeit, das Vergleichen der erstellten Energiekurve mit einer ursprünglichen Energiekurve auf Effizienzverbesserungen, das Berechnen einer Gesamtbelohnung basierend auf einer normalisierten Kombination einer Geometrieerhaltungsbelohnung (R_G) und einer Energieeffizienzbelohnung (R_E) und das iterative Verfeinern des optimierten CNC-Codes unter Verwendung des LLM als Agent basierend auf der berechneten Gesamtbelohnung bis zur Konvergenz.

## Beschreibung

Die vorliegende Offenlegung bezieht sich auf die Optimierung von CNC-Code, insbesondere auf ein Verfahren, ein System und ein Computerprogrammprodukt zur Optimierung von CNC-Code unter Verwendung künstlicher Intelligenz und unter Berücksichtigung der Nachhaltigkeit.

Die computergesteuerte numerische Steuerung (CNC) ist ein weit verbreitetes Fertigungsverfahren, bei dem computergesteuerte Werkzeugmaschinen eingesetzt werden, um komplexe Teile mit hoher Präzision herzustellen. CNC-Maschinen verwenden programmierte Anweisungen, bekannt als CNC-Code, um die Bewegung von Schneidwerkzeugen zu steuern und verschiedene Bearbeitungsparameter zu regeln. Mit dem Fortschritt der Fertigungstechnologien hat die Komplexität des CNC-Codes zugenommen, was ausgefeiltere Ansätze zur Optimierung von Bearbeitungsprozessen erfordert.

Traditionelle CNC-Programmiermethoden basieren oft auf manueller Codierung oder Computer-Aided Manufacturing (CAM) Software zur Erzeugung von Werkzeugbahnen und Maschinenanweisungen. Obwohl diese Methoden zumeist effektiv in der Erstellung des Codes sind, führen sie nicht immer zu den energie-effizientesten Fertigungsprozessen. Faktoren wie Energieverbrauch, Werkzeugverschleiß und Materialverschwendung können die Gesamteffizienz und den ökologischen Fußabdruck von CNC-Bearbeitungsvorgängen erheblich beeinflussen.

Die Optimierung von CNC-Code stellt mehrere Herausforderungen dar. Erstens macht die schiere Komplexität moderner CNC-Programme es für menschliche Programmierer schwierig, alle potenziellen Verbesserungsbereiche zu identifizieren. Zweitens erfordert die gleichzeitige Optimierung mehrerer Ziele, wie geometrische Genauigkeit, Energieeffizienz und Werkzeuglebensdauer, ein sorgfältiges Abwägen von Kompromissen. Weiterhin erfordert der Optimierungsprozess oft umfangreiches Fachwissen und Erfahrung, deren Erwerb zeit- und kostenintensiv sein kann und die dafür benötigten Fachkräfte teilweise nicht zur Verfügung stehen.

Darüber hinaus haben Nachhaltigkeitsaspekte in der Fertigung in den letzten Jahren zunehmend an Bedeutung gewonnen. Die Reduzierung des Energieverbrauchs und die Minimierung von Abfällen sind für viele Branchen wichtige Ziele, aber die Einbeziehung dieser Faktoren in die CNC-Code-Optimierung fügt einem ohnehin schon anspruchsvollen Problem eine weitere Komplexitätsebene hinzu.

Das vorgeschlagene Verfahren soll das Problem der Optimierung von CNC-Code lösen und gleichzeitig weitere Optimierungs-Ziele berücksichtigen. Traditionelle Methoden der CNC-Programmierung und -Optimierung können gegebenenfalls diese konkurrierenden Ziele nicht effektiv in Einklang zu bringen, insbesondere da die Komplexität von CNC-Programmen weiter zunimmt.

Es identifiziert potenzielle Verbesserungsbereiche in komplexen CNC-Programmen, die möglicherweise über traditionelle Optimierungstechniken hinausgehen.

Dabei soll für mehrere Ziele gleichzeitig optimiert werden, einschließlich geometrischer Genauigkeit, Energieeffizienz und Standzeit, was ein ausgeklügeltes Gleichgewicht zwischen Kompromissen erfordert.

Die zunehmende Bedeutung der Einbeziehung von Nachhaltigkeitsaspekten in die Herstellungsprozesse, fügt dem Optimierungsproblem eine weitere Komplexitätsebene hinzu.

Durch die Entwicklung eines auf künstlicher Intelligenz basierenden CNC-Code-Optimierungssystems zielt die Anwendung darauf ab, diese Herausforderungen zu meistern und einen umfassenderen, effizienteren und nachhaltigeren Ansatz für CNC-Bearbeitungsprozesse zu bieten.

Die beschriebene Aufgabe wird durch ein Verfahren gelöst gemäß den Merkmalen des Patentanspruchs 1.

Die Aufgabe wird weiterhin gelöst durch ein System mit den Merkmalen des Patentanspruchs 10 und mit einem Computerprogrammprodukt gemäß den Merkmalen des Patentanspruchs 14.

In einem ersten Aspekt wird ein Verfahren zur Erzeugung von optimiertem CNC-Code bereitgestellt. Das Verfahren umfasst:
das Empfangen eines Eingabe-CNC-Codes oder CAD-Modells;
das Generieren eines optimierten CNC-Codes basierend auf der Eingabe unter Verwendung eines vortrainierten Large Language Models (LLM);
das Erstellen eines CAD-Modells und einer entsprechenden Energieverbrauchskurve aus dem optimierten CNC-Code;
das Vergleichen des erstellten CAD-Modells mit einem ursprünglichen CAD-Modell auf geometrische Ähnlichkeit;
das Vergleichen der erstellten Energiekurve mit einer ursprünglichen Energiekurve auf Effizienzverbesserungen;
das Berechnen einer Gesamtbelohnung basierend auf einer normalisierten Kombination einer Geometrieerhaltungsbelohnung (R_{G}) und einer Energieeffizienzbelohnung (R_{E}); und
das iterative Verfeinern des optimierten CNC-Codes unter Verwendung des LLM als Agent basierend auf der berechneten Gesamtbelohnung bis zur Konvergenz.

Dieses Verfahren ermöglicht eine effiziente Optimierung des CNC-Codes unter Berücksichtigung sowohl der geometrischen Genauigkeit als auch der Energieeffizienz, was zu verbesserten Fertigungsprozessen und reduzierter Umweltbelastung führt.

Das vortrainierte Large Language Model (LLM) kann auf einem Datensatz von CNC-Programmen trainiert werden, um kontextuelle Semantik und Muster in CNC-Code zu erlernen. Das Training des LLM auf einem vielfältigen Datensatz von CNC-Programmen verbessert seine Fähigkeit, optimierten Code für verschiedene Fertigungsszenarien zu generieren, was die Vielseitigkeit und Effektivität des Optimierungsprozesses erhöht.

Das Verfahren kann weiterhin das Definieren einer Toleranz für geometrische Unterschiede zwischen dem erstellten CAD-Modell und dem ursprünglichen CAD-Modell umfassen.

Das Definieren einer Toleranz für geometrische Unterschiede ermöglicht geringfügige Anpassungen im optimierten CNC-Code, die die Effizienz erheblich verbessern können, ohne die Gesamtqualität des gefertigten Teils zu beeinträchtigen.

Das Verfahren kann weiterhin die Visualisierung von Unterschieden zwischen dem erstellten CAD-Modell und dem ursprünglichen CAD-Modell umfassen, die innerhalb der definierten Toleranz liegen.

Die Visualisierung der Unterschiede innerhalb der definierten Toleranz bietet Herstellern wertvolle Einblicke in potenzielle Kompromisse zwischen geometrischer Genauigkeit und Effizienz und ermöglicht fundierte Entscheidungen im Optimierungsprozess.

Das Verfahren kann weiterhin die Berechnung von Effizienzverbesserungen und damit verbundenen Nachhaltigkeitsfaktoren basierend auf Unterschieden zwischen der erstellten Energiekurve und der ursprünglichen Energiekurve umfassen.

Die Quantifizierung von Effizienzverbesserungen und Nachhaltigkeitsfaktoren ermöglicht es Herstellern, die ökologischen und wirtschaftlichen Vorteile des optimierten CNC-Codes zu bewerten und unterstützt datengesteuerte Entscheidungen in nachhaltigen Fertigungspraktiken. Die Gesamtbelohnung kann weiterhin eine syntaktische Korrektheitsbelohnung zur Bewertung der syntaktischen Korrektheit des optimierten CNC-Codes beinhalten.

Die Einbeziehung einer syntaktischen Korrektheitsbelohnung stellt sicher, dass der optimierte CNC-Code ausführbar bleibt und den CNC-Programmierstandards entspricht, wodurch das Risiko von Fehlern während der Fertigung reduziert wird.

Die syntaktische Korrektheitsbelohnung kann vor der Berechnung der Geometrieerhaltungsbelohnung (R_{G}) und der Energieeffizienzbelohnung (R_{E}) ausgewertet werden.

Die vorherige Auswertung der syntaktischen Korrektheit stellt sicher, dass nur gültiger CNC-Code für die weitere Optimierung berücksichtigt wird, was den Optimierungsprozess rationalisiert und den Rechenaufwand reduziert.

Teilweise prüfen CNC-Software-Tools das Programm, indem die Trajektorien simuliert werden und auf Kollisionen mit der Maschine selbst oder sogar mit dem Werkstück überprüft werden. Die LLMs sollten auf GPUs laufen, optional zusätzlich in hochskalierten Cloud Servern. Da das System sich durch das Problem durchiteriert haben wir bis auf bessere Hardware kaum Optimierungspotentiale.

In dem man einen CNC-Standard verwendet, kann man sicherstellen, dass der Code kompatibel ist. Wenn man Spezifika zu der Maschine hat, kann man das LLM auch darüber informieren, indem man diese Informationen zusätzlich in den Kontext bringt.

Das Verfahren kann weiterhin die Optimierung des CNC-Codes zur Minimierung des Werkzeugverschleißes umfassen, indem ein Werkzeugverschleißminimierungsfaktor in die Gesamtbelohnungsberechnung einbezogen wird.

Vorhersage und Optimierung der Werkzeuglebensdauer kann in den Code-Generierungsprozeß integriert werden, indem man zum Beispiel die optimalen Parameter (Schnittgeschwindigkeit, Vorschub) wählt (diese werden von den Herstellern vorgegeben) und diese während der Optimierung konstant lässt. Der Vorschub pro Umdrehung wird im CNC-Code vorgegeben. Man könnte auch eine Veschleißvorhersage miteinbeziehen.

Die Einbeziehung der Werkzeugverschleißminimierung in den Optimierungsprozess verlängert die Lebensdauer von Fertigungswerkzeugen, reduziert Wartungskosten und verbessert die Gesamteffizienz der Produktion. Wenn Industrie-Standards und Vorschriften zur Geltung kommen, die die Geometrie des Werkstückes selbst betreffen, dann lässt sich dies durch den entsprechenden Reward forcieren oder quantitativ messen.

In einem zweiten Aspekt wird ein System zur Optimierung von CNC-Code unter Verwendung künstlicher Intelligenz bereitgestellt. Das System umfasst: einen Prozessor; und einen Speicher, der Anweisungen speichert, die, wenn sie vom Prozessor ausgeführt werden, das System veranlassen, das Verfahren des ersten Aspekts durchzuführen.

Dieses System bietet eine Hardware-Implementierung für das CNC-Code-Optimierungsverfahren und ermöglicht eine nahtlose Integration in bestehende Fertigungsabläufe und -infrastrukturen. Der Prozessor kann weiterhin konfiguriert sein, um eine Toleranz für geometrische Unterschiede zwischen dem erstellten CAD-Modell und dem ursprünglichen CAD-Modell zu definieren und Unterschiede zwischen dem erstellten CAD-Modell und dem ursprünglichen CAD-Modell zu visualisieren, die innerhalb der definierten Toleranz liegen.

Diese Konfiguration verbessert die Fähigkeit des Systems, detaillierte Einblicke in den Optimierungsprozess zu liefern und unterstützt eine fundiertere Entscheidungsfindung durch Fertigungsfachleute.

Der Prozessor kann weiterhin konfiguriert sein, um Effizienzverbesserungen und damit verbundene Nachhaltigkeitsfaktoren basierend auf Unterschieden zwischen der erstellten Energiekurve und der ursprünglichen Energiekurve zu berechnen.

Diese zusätzliche Funktionalität ermöglicht es dem System, die ökologischen und wirtschaftlichen Vorteile des optimierten CNC-Codes zu quantifizieren, was nachhaltige Fertigungsinitiativen unterstützt.

In einem dritten Aspekt wird ein Computerprogrammprodukt zur Optimierung von CNC-Code unter Verwendung künstlicher Intelligenz bereitgestellt. Das Computerprogrammprodukt umfasst ein computerlesbares Speichermedium mit darin verkörperten Programmanweisungen, wobei die Programmanweisungen von einem Prozessor ausführbar sind, um den Prozessor zu veranlassen, das Verfahren des ersten Aspekts durchzuführen.

Dieses Computerprogrammprodukt ermöglicht den Einsatz des CNC-Code-Optimierungsverfahrens auf verschiedenen Computerplattformen und erhöht die Zugänglichkeit und Akzeptanz der Technologie in unterschiedlichen Fertigungsumgebungen.

Die Programmanweisungen können weiterhin vom Prozessor ausführbar sein, um den Prozessor zu veranlassen, eine Toleranz für geometrische Unterschiede zwischen dem erstellten CAD-Modell und dem ursprünglichen CAD-Modell zu definieren und Unterschiede zwischen dem erstellten CAD-Modell und dem ursprünglichen CAD-Modell zu visualisieren, die innerhalb der definierten Toleranz liegen.

Diese zusätzliche Funktionalität im Computerprogrammprodukt bietet den Benutzern visuelles Feedback zum Optimierungsprozess und ermöglicht damit ein besseres Verständnis und eine bessere Kontrolle der Kompromisse zwischen geometrischer Genauigkeit und Effizienz.

### KURZE BESCHREIBUNG DER ABBILDUNGEN

Ausführungsformen der Erfindung werden beispielhaft unter Bezugnahme auf die folgenden Zeichnungen beschrieben, in denen:
FIG. 1 zeigt ein Diagramm vom Vor-Training eines LLM gemäß Aspekten der vorliegenden Offenlegung.
FIG. 2 stellt ein schematisches Diagramm zum Grundprinzip des Reinforcement Learnings,
FIG. 3 zeigt ein Flussdiagramm eines Lernmechanismus gemäß dem Anmeldungsgegenstand,
FIG. 4 zeigt ein vereinfachtes schematisches Diagramm der Inferenz,
FIG. 5 zeigt ein Systemdiagramm mit miteinander verbundenen Komponenten für CNC-Operationen gemäß Beispielausführungsformen.

In allen Abbildungen werden, soweit möglich, gleiche Bezugszeichen verwendet, um ähnliche Merkmale anzuzeigen.

### DETAILLIERTE BESCHREIBUNG

Das System zur Optimierung von CNC-Code umfasst einen Prozessor und einen Speicher, der Anweisungen speichert. Der Prozessor führt die Anweisungen aus, um ein Verfahren zur Erzeugung von optimiertem CNC-Code durchzuführen.

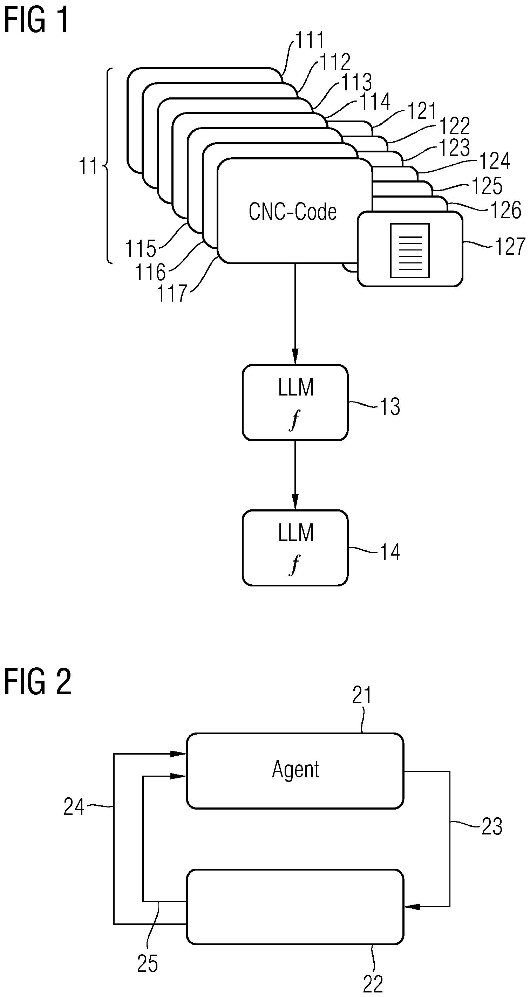

FIG. 1 zeigt das grundlegende System zur Optimierung von CNC-Code. Das System beinhaltet ein allgemeines Large Language Model LLM, 13, das durch Eingabedaten trainiert wird, nämlich durch nicht gekennzeichnete Eingabedaten, CNC-Code, 111, ... 117 und entsprechende CAD-Modelle 121, ... 127.

Das Large Language Model 13 empfängt die Eingabedaten und verarbeitet die Eingaben, um ein vortrainiertes LLM' 14 zu generieren, das dann in der Lage ist, optimierten CNC-Code zu produzieren.

Die Eingabedaten werden durch die Elemente 111, 112, 113 und 114 dargestellt. Diese können verschiedenen Arten von Eingabedateien oder Datenformaten entsprechen. Das Basis- Large Language Model ist als Element 13 dargestellt, das die Eingabe verarbeitet, um optimierten CNC-Code zu erzeugen. Zusätzliche Verarbeitungsschritte und Vergleiche werden durchgeführt, wie durch die Elemente 116, 117 und andere verbundene Komponenten im Diagramm angezeigt.

Das System beinhaltet ein Large Language Model LLM`. Das Large Language Model LLM' ist auf einen Datensatz von CNC-Programmen vortrainiert, um kontextuelle Semantik und Muster in CNC-Code zu erlernen. Dieses Vortraining ermöglicht es dem Large Language Model LLM`, CNC-Code effektiv zu verstehen und zu generieren.

Wie in FIG. 1 gezeigt, empfängt das Large Language Model 13 die Eingabedaten 1 und verarbeitet diese, um die optimierte Ausgabe zu erzeugen. Die Eingabedaten können CNC-Programme und/oder CAD-Modelle umfassen. Das Large Language Model LLM' analysiert die Eingabedaten 1 und wendet sein erlerntes Wissen über CNC-Code-Muster an, um optimierten CNC-Code als optimierte Ausgabe zu generieren.

FIG. 2 veranschaulicht den Lernmechanismus des Reinforcement Learning (also bestärkendes Lernen) detaillierter. Das Large Language Model LLM fungiert als Agent 21 in einem Reinforcement-Learning-Framework. Als Agent interagiert das Large Language Model LLM mit der CNC-Code-Umgebung 22 und führt Aktionen zur Modifikation und Optimierung des Codes basierend auf erhaltenen Belohnungen durch.

Der Trainingsmechanismus des Large Language Models LLM beinhaltet eine iterative Verfeinerung des generierten CNC-Codes. Das Large Language Model LLM generiert Kandidaten für optimierten Code 111, ..., die dann basierend auf geometrischer Ähnlichkeit zum ursprünglichen Design und Verbesserungen der Energieeffizienz bewertet werden. Basierend auf diesen Bewertungen erhält das Large Language Model LLM Belohnungen (den sogenannten Reward) 25, zusammen mit einem Status 24, beispielsweise dem Status der Umgebung 22 (also beispielsweise dem aktuell erzeugten Code), die weitere Optimierungen in nachfolgenden Iterationen leiten.

Durch diesen Trainingsprozess lernt das Large Language Model LLM, CNC-Code zu generieren, der die geometrische Genauigkeit beibehält und gleichzeitig Effizienz- und Nachhaltigkeitsfaktoren verbessert. Das Vortraining mit verschiedenen CNC-Programmbeispielen, wie in Figur 1 dargestellt, ermöglicht es dem Large Language Model LLM, ein breites Verständnis von CNC-Code-Strukturen und -Konventionen zu entwickeln, das der Reinforcement-Learning-Prozess dann für spezifische Optimierungsaufgaben verfeinert.

Der Optimierungsprozess umfasst mehrere Schritte zur Verfeinerung des generierten CNC-Codes für verbesserte Effizienz und geometrische Genauigkeit.

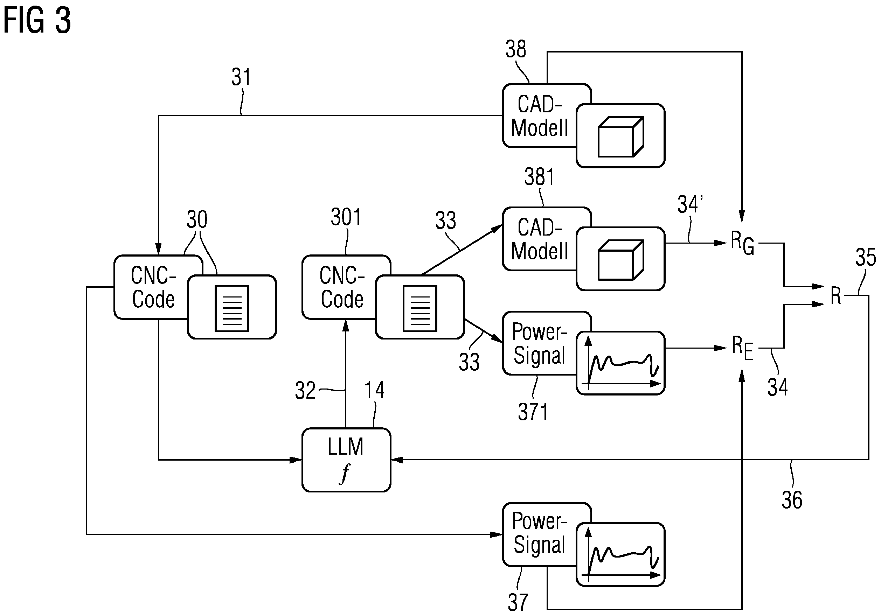

Wie in FIG. 3 gezeigt, wird nach der Generierung des optimierten CNC-Codes 30 durch das Large Language Model ein CAD-Modell 38 basierend auf diesem optimierten Code erstellt, 31. Zusätzlich wird eine Energieverbrauchskurve generiert, um den erwarteten Energieverbrauch während des Fertigungsprozesses unter Verwendung des optimierten Codes darzustellen. Eine Energieverbrauchskurve kann sich auf eine grafische Darstellung oder einen Datensatz beziehen, der das Energieverbrauchs- oder Effizienzprofil im Zusammenhang mit der Ausführung eines spezifischen CNC-Codes oder Bearbeitungsvorgangs veranschaulicht. Diese Energiekurve kann dabei
- Den Energieverbrauch über die Zeit während des Bearbeitungsprozesses zeigen
- Den Stromverbrauch in verschiedenen Phasen des CNC-Betriebs darstellen
- Spitzen und Täler im Energiebedarf während verschiedener Bearbeitungsschritte anzeigen
- Eine visuelle oder numerische Darstellung der Gesamtenergieeffizienz für ein bestimmtes CNC-Programm liefern
- Den Vergleich zwischen verschiedenen CNC-Code-Versionen hinsichtlich ihrer Energieleistung ermöglichen
- Bei der Identifizierung von Bereichen mit potentieller Energieoptimierung im Bearbeitungsprozess helfen
- Als Metrik zur Bewertung der durch Codeoptimierung erreichten Verbesserungen in Nachhaltigkeit und Effizienz dienen.

Die Energieverbrauchskurve kann durch Simulation, Echtzeitüberwachung oder prädiktive Modellierung basierend auf den CNC-Code-Parametern und Maschineneigenschaften generiert werden. Sie kann in Verbindung mit anderen Metriken verwendet werden, um die Gesamtleistung und Effizienz des optimierten CNC-Codes zu bewerten.

Konflikte zwischen geometrischer Genauigkeit und Energieeffizienz während der Optimierung können auf verschiedene Weise aufgelöst werden.

Beide Rewards wurden bisher einfach aufaddiert. Wenn man aber aus der Summe eine gewichtete Summe macht, kann man die Geometrie oder die Effizienz betonen.

Im schlechtesten Fall kommt es zu einer Equillibriumsoptimierung, deren Lösung ein Sattelpunkt ist. In ähnlichen Systemen wie Generative Adversarial Networks GAN, kann man so eine Optimierung lösen indem man abwechselnd den einen Reward optimiert und dann wieder den anderen, und so weiter. Nach einer gewissen Zeit ist das System konvergiert, sprich man sieht keine Veränderungen im CNC-Code mehr.

In einem weiteren Schritt 32 wird das vortrainierte LLM dazu verwendet, aus dem CNC-Code 30 einen neuen, vermutlich gegenüber dem ursprünglichen Code optimierten CNC-Code 301 zu generieren. Basierend auf diesem neuen Code 301 wird ein CAD Modell 381 und eine Energieverbrauchskurve 371 erzeugt, 33.

Das System führt dann Vergleiche zwischen dem neu erstellten CAD-Modell 381 und dem ursprünglichen CAD-Modell 38 durch. Dieser Vergleich 34 bewertet die geometrische Ähnlichkeit zwischen den beiden Modellen, um sicherzustellen, dass der optimierte Code die beabsichtigte Form und die Abmessungen des zu fertigenden Teils beibehält.

Ebenso vergleicht das System die aus dem optimierten CNC-Code abgeleitete Energieverbrauchskurve 371 mit der ursprünglichen Energiekurve 37, die dem ursprünglichen CNC-Code 30 entspricht. Dieser Vergleich ermöglicht die Bewertung potenzieller Effizienzverbesserungen hinsichtlich des Energieverbrauchs während des Fertigungsprozesses.

Basierend auf diesen Vergleichen berechnet das System Belohnungen R (Reward). Eine Geometrieerhaltungsbelohnung R_{G} wird basierend auf der Ähnlichkeit zwischen dem erstellten CAD-Modell und dem ursprünglichen CAD-Modell bestimmt. Eine Energieeffizienzbelohnung R_{E} wird durch Bewertung der Verbesserungen in der Energieverbrauchskurve im Vergleich zur ursprünglichen Kurve berechnet.

Der Begriff "Geometrieerhaltungsbelohnung" kann sich auf ein quantitatives Maß oder einen Wert beziehen, der den Grad bewertet, in dem ein optimierter CNC-Code die beabsichtigten geometrischen Merkmale und Abmessungen des ursprünglichen Designs oder CAD-Modells beibehält. Diese Belohnung kann die Ähnlichkeit zwischen dem aus dem optimierten CNC-Code erstellten CAD-Modell und dem ursprünglichen CAD-Modell bewerten und die Genauigkeit kritischer Abmessungen, Formen und Oberflächenmerkmale im optimierten Design quantifizieren, dabei Toleranzen und akzeptable Abweichungen von der ursprünglichen Geometrie berücksichtigen.

Dabei wird der iterative Verfeinerungsprozess geleitet, um sicherzustellen, dass Optimierungen die beabsichtigte Produktgeometrie nicht beeinträchtigen.

Die Geometrieerhaltungsbelohnung kann unter Verwendung verschiedener Algorithmen, Vergleichstechniken oder maschineller Lernmodelle berechnet werden, die 3D-Geometrien analysieren und vergleichen.

Wie in FIG. 2 dargestellt, dienen diese Belohnungen als Eingaben zur Steuerung des Optimierungsprozesses, also des Trainingsprozesses der LLM. Die Belohnungen werden an das Large Language Model LLM zurückgeführt, das als Agent im Optimierungsrahmen fungiert. Das Large Language Model LLM verwendet diese Belohnungen, um seine Ausgabe in nachfolgenden Iterationen zu verfeinern, mit dem Ziel, CNC-Code zu generieren, der die beabsichtigte Geometrie besser bewahrt und gleichzeitig die Energieeffizienz verbessert.

Der Optimierungsprozess wird iterativ fortgesetzt, wobei das Large Language Model basierend auf den erhaltenen Belohnungen neue Versionen des optimierten CNC-Codes generiert. Jede Iteration kann inkrementelle Verbesserungen sowohl in der geometrischen Genauigkeit als auch in der Energieeffizienz hervorbringen. Der Prozess kann fortgesetzt werden, bis ein vorgegebenes Konvergenzkriterium erfüllt ist oder eine festgelegte Anzahl von Iterationen abgeschlossen ist. Dabei kann es sich um eine Veränderung unterhalb eines festgelegten Wertes handeln, oder wenn der generierte Code zwischen verschiedenen Versionen hin- und her wechselt.

Der Prozess der Belohnungsberechnung beinhaltet mehrere Faktoren, um sicherzustellen, dass der optimierte CNC-Code verschiedene Leistungskriterien erfüllt. Die Hauptkomponenten der Belohnungsberechnung sind die Geometrieerhaltungsbelohnung R_{G} und die Energieeffizienzbelohnung R_{E}

Die Geometrieerhaltungsbelohnung R_{G} wird durch den Vergleich des aus dem optimierten CNC-Code generierten CAD-Modells mit dem ursprünglichen CAD-Modell berechnet. Dieser

Vergleich bewertet die Ähnlichkeit zwischen den beiden Modellen und stellt sicher, dass der optimierte Code die beabsichtigte Form und die Abmessungen des zu fertigenden Teils beibehält. Der Belohnungswert steigt mit zunehmender geometrischer Ähnlichkeit zwischen den Modellen. Die Energieeffizienzbelohnung R_{E} wird durch den Vergleich der aus dem optimierten CNC-Code abgeleiteten Energieverbrauchskurve mit der ursprünglichen Energiekurve bestimmt. Dieser Vergleich bewertet potenzielle Effizienzverbesserungen hinsichtlich des Energieverbrauchs während des Fertigungsprozesses. Ein höherer Belohnungswert wird für größere Reduzierungen des Energieverbrauchs vergeben.

Zur Berechnung der Gesamtbelohnung werden die Geometrieerhaltungsbelohnung R_{G} und die Energieeffizienzbelohnung R_{E} zunächst normalisiert, um sicherzustellen, dass sie auf vergleichbaren Skalen liegen. Der Normalisierungsprozess kann die Skalierung jeder Belohnung auf einen vordefinierten Bereich, wie 0 bis 1, beinhalten. Nach der Normalisierung werden die Belohnungen unter Verwendung eines gewichteten Summenansatzes kombiniert. Die Gewichte, die jeder Belohnung zugewiesen werden, können basierend auf der relativen Bedeutung von geometrischer Genauigkeit und Energieeffizienz für die spezifische Fertigungsaufgabe angepasst werden.

In einigen Beispielen können zusätzliche Belohnungsfaktoren in die Gesamtbelohnungsberechnung einbezogen werden. Eine syntaktische Korrektheitsbelohnung kann einbezogen werden, um die syntaktische Gültigkeit des generierten CNC-Codes zu bewerten. Diese Belohnung stellt sicher, dass der optimierte Code die für die CNC-Programmierung erforderliche korrekte Syntax und Struktur einhält. Die syntaktische Korrektheitsbelohnung kann vor der Berechnung der Geometrieerhaltungsbelohnung R_{G} und der Energieeffizienzbelohnung R_{E} ausgewertet werden, um sicherzustellen, dass nur syntaktisch gültiger Code für die weitere Optimierung berücksichtigt wird.

Ein weiterer potenzieller Belohnungsfaktor ist die Minimierung des Werkzeugverschleißes. Durch die Einbeziehung eines Werkzeugverschleißminimierungsfaktors in die Gesamtbelohnungsberechnung kann der Optimierungsprozess die Auswirkungen des generierten CNC-Codes auf die Werkzeuglebensdauer berücksichtigen. Dieser Faktor kann auf Parametern wie Schnittkräften, Werkzeugbahnglättung oder Materialabtragungsraten basieren.

Das Large Language Model LLM kann so konfiguriert werden, dass es über Geometrie und Energieverbrauch hinaus für diese zusätzlichen Kriterien optimiert. Durch die Einbeziehung mehrerer Belohnungsfaktoren kann der Optimierungsprozess verschiedene Leistungsaspekte ausbalancieren, einschließlich geometrischer Genauigkeit, Energieeffizienz, Coderichtigkeit und Werkzeugverschleiß.

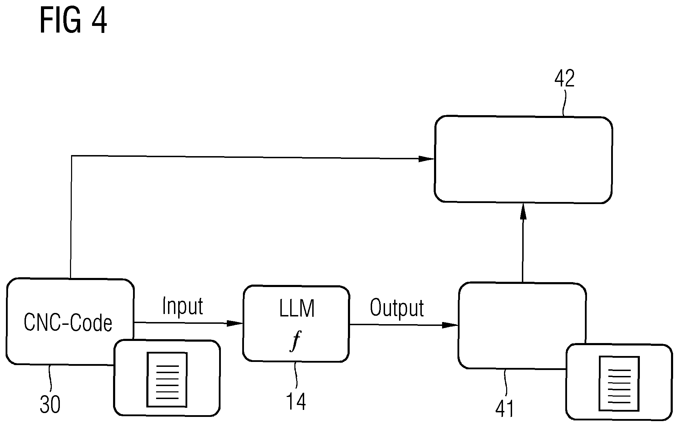

FIG. 4 veranschaulicht den Prozess der Belohnungsberechnung innerhalb des gesamten Optimierungsrahmens in der Inferenzphase. Der vom Large Language Model LLM 14 generierte optimierte CNC-Code 41 wird verwendet, um ein CAD-Modell und eine Energieverbrauchskurve zu erstellen. Diese werden dann mit dem ursprünglichen CAD-Modell und der Energiekurve verglichen, um die jeweiligen Belohnungen zu berechnen 42. Die kombinierte Belohnung wird an das Large Language Model LLM zurückgeführt, um weitere Optimierungen in nachfolgenden Iterationen zu leiten.

Das System implementiert einen iterativen Verfeinerungsprozess zur Optimierung des CNC-Codes unter Verwendung des Large Language Models LLM als Agent. Dieser Prozess beinhaltet die wiederholte Generierung und Bewertung von optimiertem CNC-Code basierend auf berechneten Belohnungen, bis ein Konvergenzkriterium erfüllt ist.

Wie in FIG. 2 gezeigt, fungiert das Large Language Model LLM als Agent innerhalb eines Reinforcement-Learning-Frameworks. Der Agent interagiert mit einer Umgebung, die die CNC-Code-Optimierungsaufgabe repräsentiert. Der Agent führt Aktionen aus, indem er CNC-Code generiert oder modifiziert, und erhält Feedback in Form von Belohnungen, die basierend auf der Leistung des generierten Codes berechnet werden.

FIG. 4 veranschaulicht den Informationsfluss während des iterativen Verfeinerungsprozesses. Das Large Language Model generiert optimierten CNC-Code basierend auf der Eingabe. Dieser optimierte Code wird dann verwendet, um ein CAD-Modell und eine Energieverbrauchskurve zu erstellen. Das System vergleicht diese Ausgaben mit dem ursprünglichen CAD-Modell und der Energiekurve, um Belohnungen für Geometrieerhaltung und Energieeffizienz zu berechnen. Die berechneten Belohnungen werden zu einer Gesamtbelohnung kombiniert, die als Feedback dient, um das Large Language Model in nachfolgenden Iterationen zu leiten. Das Large Language Model verwendet dieses Feedback, um seine Ausgabe anzupassen, mit dem Ziel, CNC-Code zu generieren, der die beabsichtigte Geometrie besser bewahrt und gleichzeitig die Energieeffizienz verbessert.

Der iterative Verfeinerungsprozess wird fortgesetzt, bis eine Konvergenz erreicht ist. Die Konvergenz kann basierend auf verschiedenen Kriterien bestimmt werden, zum Beispiel:
Die Gesamtbelohnung erreicht einen vordefinierten Schwellenwert, die Verbesserung der Belohnungswerte zwischen aufeinanderfolgenden Iterationen fällt unter eine festgelegte Toleranz oder eine maximale Anzahl von Iterationen wurde abgeschlossen.

Während jeder Iteration verfeinert das Large Language Model LLM seine Ausgabe basierend auf den erhaltenen Belohnungen. Das Modell kann verschiedene Aspekte des generierten CNC-Codes anpassen, um sowohl für geometrische Genauigkeit als auch für Energieeffizienz zu optimieren, wie
- Werkzeugbahnen,
- Schneidparameter oder
- die Abfolge von Operationen.

Die iterative Natur dieses Prozesses ermöglicht es dem System, eine breite Palette potenzieller Optimierungen anzuwenden und dabei kontinuierlich die Qualität des generierten CNC-Codes zu verbessern. Durch die Verwendung des Large Language Models als Agent und die Nutzung berechneter Belohnungen kann das System effektiv den komplexen Optimierungsraum navigieren und zu hochwertigen Lösungen konvergieren, die mehrere Leistungskriterien ausbalancieren.

Die vom Large Language Model LLM' generierte optimierte Ausgabe ist CNC-Code, der geometrische Genauigkeit mit Energieeffizienz und anderen Optimierungskriterien in Einklang bringt. Dieser optimierte CNC-Code ist darauf ausgelegt, die beabsichtigte Form und die Abmessungen des zu fertigenden Teils beizubehalten und gleichzeitig den Energieverbrauch während des Fertigungsprozesses zu verbessern.

Das Large Language Model LLM' verarbeitet die Eingabedaten, die ursprünglichen CNC-Code oder CAD-Modelle umfassen können, um die optimierte Ausgabe zu generieren. Die optimierte Ausgabe beinhaltet Modifikationen verschiedener Aspekte des CNC-Codes, wie Werkzeugbahnen, Schneidparameter und Operationssequenzen, um eine verbesserte Leistung zu erzielen. Bei der Generierung der optimierten Ausgabe berücksichtigt das Large Language Model mehrere Faktoren. Der optimierte CNC-Code zielt darauf ab, die geometrische Genauigkeit des ursprünglichen Designs zu bewahren, indem sichergestellt wird, dass die Werkzeugbahnen und Schneidvorgänge ein Teil produzieren, das den beabsichtigten Spezifikationen genau entspricht. Gleichzeitig beinhaltet die optimierte Ausgabe Änderungen, die zu einem reduzierten Energieverbrauch während des Fertigungsprozesses führen können, wie optimierte Schnittgeschwindigkeiten oder effizientere Werkzeugbewegungen.

Die optimierte Ausgabe kann auch Modifikationen enthalten, die zusätzliche Optimierungskriterien berücksichtigen. Zum Beispiel kann der CNC-Code so strukturiert sein, dass er den Werkzeugverschleiß minimiert, indem Schnittkräfte angepasst oder die Abfolge von Operationen optimiert wird. Die optimierte Ausgabe ist darauf ausgelegt, syntaktisch korrekt zu sein und stellt sicher, dass der generierte CNC-Code die für die CNC-Programmierung erforderliche korrekte Syntax und Struktur einhält.

Durch die Ausbalancierung dieser verschiedenen Optimierungskriterien stellt die optimierte Ausgabe eine verbesserte Version des ursprünglichen CNC-Codes dar, die darauf abzielt, die Fertigungseffizienz zu verbessern und gleichzeitig die Produktqualität zu erhalten. Der vom System generierte optimierte CNC-Code kann nahtlos in bestehende Fertigungsprozesse integriert werden.

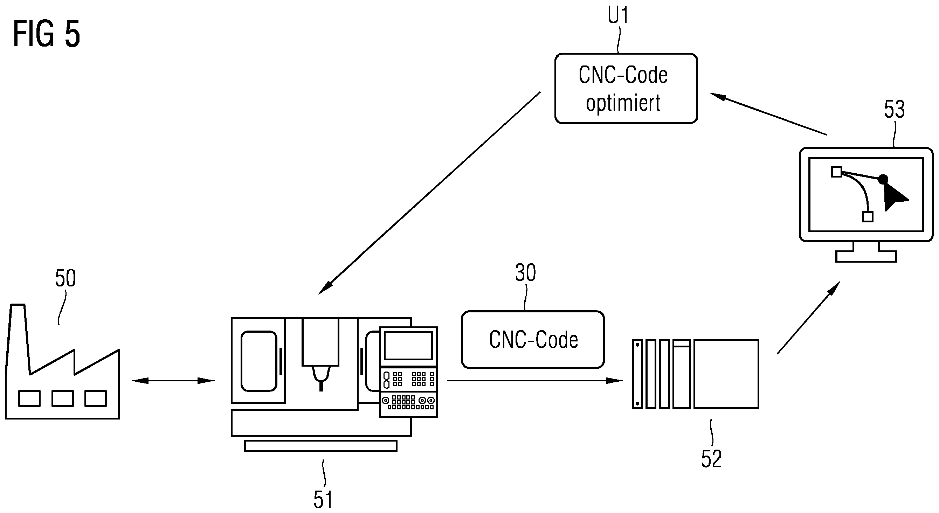

Wie in FIG. 5 gezeigt, wird der optimierte CNC-Code U1 an die Steuereinheit 52 der CNC-Maschine 51 gesendet. Die Steuereinheit 52 interpretiert den optimierten Code und steuert die CNC-Maschine 51, um den Fertigungsprozess mit verbesserter Effizienz und Genauigkeit auszuführen. Die CNC-Maschine ist beispielsweise Teil einer Fertigungsanlage 50.

Die Figur veranschaulicht, wie das System Unterschiede zwischen dem erstellten CAD-Modell und dem ursprünglichen CAD-Modell visualisieren kann, die innerhalb der definierten Toleranz liegen. Das Visualisierungsmodul generiert visuelle Darstellungen dieser Unterschiede, die auf dem Display 53 angezeigt werden können. Diese Visualisierungsfähigkeit ermöglicht es Ingenieuren und Bedienern, die Auswirkungen von Optimierungen auf die Teilgeometrie schnell zu bewerten und fundierte Entscheidungen darüber zu treffen, ob der optimierte Code akzeptiert werden soll.

In verschiedenen industriellen Umgebungen kann das System zur Optimierung von CNC-Code erhebliche Vorteile bieten. Beispielsweise kann in der Luft- und Raumfahrtfertigung, wo Präzision und Materialeffizienz entscheidend sind, der optimierte CNC-Code dazu beitragen, Abfälle zu reduzieren und gleichzeitig enge Toleranzen einzuhalten. In der Automobilproduktion kann das System Werkzeugbahnen für komplexe Teile optimieren und möglicherweise Zykluszeiten und Energieverbrauch reduzieren.

Das System ermöglicht die Definition einer Toleranz für geometrische Unterschiede zwischen dem erstellten CAD-Modell und dem ursprünglichen CAD-Modell. Diese Toleranzeinstellung ermöglicht es Herstellern, akzeptable Abweichungen in der Teilgeometrie zu spezifizieren und dennoch die allgemeinen Optimierungsziele zu erreichen. Ein Hersteller kann beispielsweise eine Toleranz von 0,1 mm für unkritische Oberflächen festlegen, während für kritische Merkmale engere Toleranzen beibehalten werden.

Durch die Bereitstellung von Toleranzdefinition und Differenzvisualisierung ermöglicht das System Herstellern, Optimierungsziele mit geometrischen Anforderungen in Einklang zu bringen. Diese Flexibilität kann besonders wertvoll in Branchen wie der Medizintechnik sein, wo bestimmte Merkmale eine exakte Replikation erfordern, während andere leichte Variationen tolerieren können, um die Gesamtproduktionseffizienz zu verbessern.

Die Integration von optimiertem CNC-Code in bestehende Prozesse kann zu reduziertem Materialabfall, geringerem Energieverbrauch und verbesserter Werkzeuglebensdauer in verschiedenen Fertigungsanwendungen führen. Die Fähigkeit des Systems, mehrere Optimierungskriterien gleichzeitig zu berücksichtigen, ermöglicht einen ganzheitlichen Ansatz zur Verbesserung der Fertigungseffizienz bei gleichzeitiger Aufrechterhaltung der Produktqualität.

Das System zur Optimierung von CNC-Code implementiert einen Workflow, der künstliche Intelligenz integriert, um sowohl Effizienz als auch Nachhaltigkeit in Fertigungsprozessen zu erreichen. Dieser Workflow beginnt mit der Eingabe von CNC-Code oder CAD-Modellen und durchläuft mehrere Stufen der Analyse und Optimierung.

Ein wichtiger Aspekt des Optimierungsprozesses beinhaltet die Berechnung von Effizienzverbesserungen und damit verbundenen Nachhaltigkeitsfaktoren basierend auf Unterschieden zwischen der erstellten Energiekurve und der ursprünglichen Energiekurve. Das System generiert eine Energieverbrauchskurve sowohl für den ursprünglichen CNC-Code als auch für die optimierte Version. Durch den Vergleich dieser Kurven kann das System potenzielle Energieeinsparungen und damit verbundene Reduzierungen der Umweltauswirkungen quantifizieren.

Die Effizienzverbesserungen werden durch die Analyse der Unterschiede im Energieverbrauch zwischen den ursprünglichen und optimierten Prozessen berechnet. Dies kann Faktoren wie reduzierte Bearbeitungszeit, optimierte Werkzeugbahnen und verbesserte Schneidparameter umfassen. Das System kann diese Verbesserungen in Form von prozentualen Reduzierungen des Energieverbrauchs oder Zeiteinsparungen ausdrücken.

Nachhaltigkeitsfaktoren werden aus den Effizienzverbesserungen abgeleitet und können Metriken wie reduzierte Kohlenstoffemissionen, verringerter Materialabfall und verlängerte Werkzeuglebensdauer umfassen. Beispielsweise kann eine Reduzierung des Energieverbrauchs direkt in eine entsprechende Verringerung der Kohlenstoffemissionen umgerechnet werden, basierend auf der in der Fertigungsanlage verwendeten Energiequelle.

Das System kann auch zusätzliche Nachhaltigkeitsfaktoren berücksichtigen, wie die Auswirkungen auf den Kühlmittelverbrauch, die Reduzierung von Ausschussmaterial und das Potenzial für eine erhöhte Produktqualität (was zu weniger zurückgewiesenen Teilen und weniger Abfall führen kann). Diese Faktoren werden quantifiziert und zusammen mit den Effizienzverbesserungen präsentiert, um einen umfassenden Überblick über die Auswirkungen der Optimierung sowohl auf die Fertigungsleistung als auch auf die ökologische Nachhaltigkeit zu geben.

Durch die Integration dieser Berechnungen in den Optimierungs-Workflow stellt das System sicher, dass der generierte CNC-Code nicht nur die geometrische Genauigkeit beibehält, sondern auch zu nachhaltigeren Fertigungspraktiken beiträgt. Dieser Ansatz ermöglicht es Herstellern, fundierte Entscheidungen über die Implementierung von optimiertem CNC-Code zu treffen und dabei Produktionseffizienz mit Umweltaspekten in Einklang zu bringen.

In einer Ausführungsform können weitere Ziele für die Optimierung berücksichtigt werden, beispielsweise:
- Erweiterung des Systems zur Berücksichtigung zusätzlicher Ziele über Geometrie und Energieeffizienz hinaus
- Einbeziehung von Faktoren wie Werkzeugverschleiß, Oberflächenqualität und Produktionszeit
- Ermöglichung für Benutzer, benutzerdefinierte Gewichtungen für verschiedene Optimierungsziele festzulegen.

Das System kann weiterhin bei der prädiktiven Wartung berücksichtigt werden:
- Einbeziehung von Maschinenzustandsdaten in den Optimierungsprozess
- Vorhersage potenzieller Ausfälle oder Wartungsbedarf basierend auf optimiertem CNC-Code
- Anpassung von Optimierungsstrategien zur Verlängerung der Maschinenlebensdauer und Reduzierung von Ausfallzeiten.

Ein weiterer vorteilhafter Anwendungsfall kann in der Materialspezifische Optimierung gesehen werden:
- Entwicklung spezialisierter Optimierungsmodelle für verschiedene Materialien (z. B. Metalle, Kunststoffe, Verbundwerkstoffe)
- Berücksichtigung von Materialeigenschaften und -verhalten im Optimierungsprozess
- Optimierung für materialspezifische Faktoren wie Spanbildung und Wärmeableitung.

Auch wenn das beschriebene Beispiel sich auf die Optimierung eines CNC-Codes für eine Bearbeitungsmaschine beschränkt, so ist es weiterhin vorstellbar, die Optimierung über mehrere Maschinen durchzuführen, beispielsweise bezogen auf eine Bearbeitungskette eines Werkstücks über mehrere Bearbeitungsstationen hinweg:
- Erweiterung des Systems zur gleichzeitigen Optimierung von CNC-Code über mehrere Maschinen hinweg
- Berücksichtigung von Lastausgleich und Produktionsplanung im Optimierungsprozess
- dabei Optimierung für die Gesamteffizienz der Fabrik anstelle der Leistung einzelner Maschinen.

Weitere Ausführungsbeispielse sind vorstellbar, bezüglich eines Hybriden Optimierungsansatesz:
- Kombination der Kt-basierten Optimierung mit traditionellen regelbasierten Optimierungstechniken,
- Einbeziehung von Fachwissen von Domänenexperten in den Optimierungsprozess,
- Ermöglichung manueller Überschreibungen und Feinabstimmungen von Kl-generierten Optimierungen.

Die beschriebene Lösung kommt vorteilhafterweise ohne externe Sensorik aus, und lässt sich daher an beliebigen CNC-Maschinen anwenden.

Weiterhin sind keine Historien-Daten (also von früheren Bearbeitungszyklen) erforderlich, und damit kein Eingriff von Experten. Das bewirkt, dass die vorgeschlagene Lösung nicht nur für Serienfertigungen sondern auch für Sonderfertigungen geeignet ist.

## Patentansprüche

1. Computerimplementiertes Verfahren zur Erzeugung von optimiertem CNC-Code (41), umfassend:
- Empfangen eines Eingabe-CNC-Codes oder CAD-Modells (30);
- Generieren eines optimierten CNC-Codes basierend auf der Eingabe unter Verwendung eines vortrainierten Large Language Models (LLM`, 14);
- Erstellen eines CAD-Modells (41) und einer entsprechenden Energieverbrauchskurve aus dem optimierten CNC-Code (43);
- Vergleichen des erstellten CAD-Modells mit einem ursprünglichen CAD-Modell auf geometrische Ähnlichkeit;
- Vergleichen der erstellten Energiekurve mit einer ursprünglichen Energieverbrauchskurve auf Effizienzverbesserungen;
- Berechnen einer Gesamtbelohnung basierend auf einer normalisierten Kombination einer Geometrieerhaltungsbelohnung (R_{G}) und einer Energieeffizienzbelohnung (R_{E}); und
- iteratives Verfeinern des optimierten CNC-Codes unter Verwendung des LLM als Agent basierend auf der berechneten Gesamtbelohnung bis zur Konvergenz.

2. Das Computerimplementiertes Verfahren nach Anspruch 1, **dadurch gekennzeichnet, dass** das vortrainierte Large Language Model (LLM`) auf einem Datensatz von CNC-Programmen trainiert wird, um kontextuelle Semantik und Muster in CNC-Code zu erlernen.

3. Das Computerimplementiertes Verfahren nach Anspruch 1, **dadurch gekennzeichnet, dass** die Berechnung der Gesamtbelohnung weiterhin das Normalisieren und Kombinieren der Geometrieerhaltungsbelohnung (R_{G}) und der Energieeffizienzbelohnung (R_{E}) umfasst.

4. Das Computerimplementiertes Verfahren nach Anspruch 1, weiterhin umfassend
das Definieren einer Toleranz für geometrische Unterschiede zwischen dem erstellten CAD-Modell (381) und dem ursprünglichen CAD-Modell (38).

5. Das Computerimplementiertes Verfahren nach Anspruch 4, weiterhin umfassend
die Visualisierung von Unterschieden zwischen dem erstellten CAD-Modell (381) und dem ursprünglichen CAD-Modell (38), die innerhalb der definierten Toleranz liegen.

6. Das Computerimplementiertes Verfahren nach Anspruch 1, weiterhin umfassend
die Berechnung von Effizienzverbesserungen und damit verbundenen Nachhaltigkeitsfaktoren basierend auf Unterschieden zwischen der erstellten Energieverbrauchskurve (371) und der ursprünglichen Energieverbrauchskurve.

7. Das Computerimplementiertes Verfahren nach einem der Ansprüche 1 bis 6, **dadurch gekennzeichnet, dass**
die Gesamtbelohnung weiterhin eine syntaktische Korrektheitsbelohnung zur Bewertung der syntaktischen Korrektheit des optimierten CNC-Codes beinhaltet.

8. Das Computerimplementiertes Verfahren nach Anspruch 7, **dadurch gekennzeichnet, dass**
die syntaktische Korrektheitsbelohnung vor der Berechnung der Geometrieerhaltungsbelohnung (R_{G}) und der Energieeffizienzbelohnung (R_{E}) ausgewertet wird.

9. Das Computerimplementiertes Verfahren nach einem der Ansprüche 1 bis 8,
weiterhin umfassend die Optimierung des CNC-Codes zur Minimierung des Werkzeugverschleißes durch Einbeziehung eines Werkzeugverschleißminimierungsfaktors in die Gesamtbelohnungsberechnung.

10. Ein System zur Optimierung von CNC-Code unter Verwendung künstlicher Intelligenz, umfassend:
einen Prozessor; und
einen Speicher, der Anweisungen speichert, die, wenn sie vom Prozessor ausgeführt werden, das System veranlassen, das Verfahren nach Anspruch 1 durchzuführen.

11. Das System nach Anspruch 10, **dadurch gekennzeichnet, dass**
der Prozessor weiterhin konfiguriert ist, um eine Toleranz für geometrische Unterschiede zwischen dem erstellten CAD-Modell und dem ursprünglichen CAD-Modell zu definieren und Unterschiede zwischen dem erstellten CAD-Modell und dem ursprünglichen CAD-Modell zu visualisieren, die innerhalb der definierten Toleranz liegen.

12. Das System nach Anspruch 10 oder 11, **dadurch gekennzeichnet, dass**
der Prozessor weiterhin konfiguriert ist, um Effizienzverbesserungen und damit verbundene Nachhaltigkeitsfaktoren basierend auf Unterschieden zwischen der erstellten Energiekurve und der ursprünglichen Energiekurve zu berechnen.

13. Das System nach einem der Ansprüche 10 bis 12, **dadurch gekennzeichnet, dass**
die Gesamtbelohnung weiterhin eine syntaktische Korrektheitsbelohnung zur Bewertung der syntaktischen Korrektheit des optimierten CNC-Codes beinhaltet, und wobei die syntaktische Korrektheitsbelohnung vor der Berechnung der Geometrieerhaltungsbelohnung (R_{G}) und der Energieeffizienzbelohnung (R_{E}) ausgewertet wird.

14. Ein Computerprogrammprodukt zur Optimierung von CNC-Code unter Verwendung künstlicher Intelligenz, wobei
das Computerprogrammprodukt ein computerlesbares Speichermedium mit darin verkörperten Programmanweisungen umfasst, wobei die Programmanweisungen von einem Prozessor ausführbar sind, um den Prozessor zu veranlassen, das Verfahren nach Anspruch 1 durchzuführen.

15. Das Computerprogrammprodukt nach Anspruch 14, **dadurch gekennzeichnet, dass**
die Programmanweisungen weiterhin vom Prozessor ausführbar sind, um den Prozessor zu veranlassen, eine Toleranz für geometrische Unterschiede zwischen dem erstellten CAD-Modell und dem ursprünglichen CAD-Modell zu definieren und Unterschiede zwischen dem erstellten CAD-Modell und dem ursprünglichen CAD-Modell zu visualisieren, die innerhalb der definierten Toleranz liegen.
